Europäisches Patentamt

European Patent Office

Office européen des brevets

(19)

(11) **EP 1 356 652 B1**

(12) **EUROPEAN PATENT SPECIFICATION**

(45) Date of publication and mention
of the grant of the patent:
**28.06.2006 Bulletin 2006/26**

(51) Int Cl.:
*H04L 27/34* (2006.01)   *H03M 13/00* (2006.01)

(21) Application number: **01273152.7**

(22) Date of filing: **14.12.2001**

(86) International application number:
**PCT/IB2001/002556**

(87) International publication number:
**WO 2002/056559 (18.07.2002 Gazette 2002/29)**

(54) **Bit interleaved coded modulation (BICM) mapping**

Abbildung bit-verschachtelter Kodierter Modulation (BICM)

Mappage par modulation à codage par entrelacement de bits

(84) Designated Contracting States:
**AT BE CH CY DE DK ES FI FR GB GR IE IT LI LU MC NL PT SE TR**

(30) Priority: **16.01.2001 EP 01200152**

(43) Date of publication of application:
**29.10.2003 Bulletin 2003/44**

(73) Proprietor: **Koninklijke Philips Electronics N.V.
5621 BA Eindhoven (NL)**

(72) Inventors:
- **GOROKHOV, Alexei**
  **NL-5656 AA Eindhoven (NL)**
- **VAN DIJK, Marten, E.**
  **NL-5656 AA Eindhoven (NL)**
- **KOPPELAAR, Arie, G., C.**
  **NL-5656 AA Eindhoven (NL)**

(74) Representative: **Deguelle, Wilhelmus H. G.
Philips
Intellectual Property & Standards
P.O. Box 220
5600 AE Eindhoven (NL)**

(56) References cited:
**EP-A- 0 948 140**

- LI X ET AL: "TRELLIS-CODED MODULATION WITH BIT INTERLEAVING AND ITERATIVE DOCODING" IEEE JOURNAL ON SELECTED AREAS IN COMMUNICATIONS, IEEE INC. NEW YORK, US, vol. 17, no. 4, April 1999 (1999-04), pages 715-724, XP000824314 ISSN: 0733-8716 cited in the application
- GOROKHOV A ; VAN DIJK M: "Optimised labeling maps for bit-interleaved transmission with turbo demodulation" IEEE VTS 53RD VEHICULAR TECHNOLOGY CONFERENCE, PROCEEDINGS, 6 - 9 May 2001, pages 1459-1463, XP002194006 Rhodes, Greece

## Description

The invention relates to a transmission system for transmitting a multilevel signal from a transmitter to a receiver.

The invention further relates to a transmitter for transmitting a multilevel signal, a receiver for receiving a multilevel signal, a mapper for mapping an interleaved encoded signal according to a signal constellation onto a multilevel signal, a demapper for demapping a multilevel signal according to a signal constellation, a method of transmitting a multilevel signal from a transmitter to a receiver and to a signal constellation.

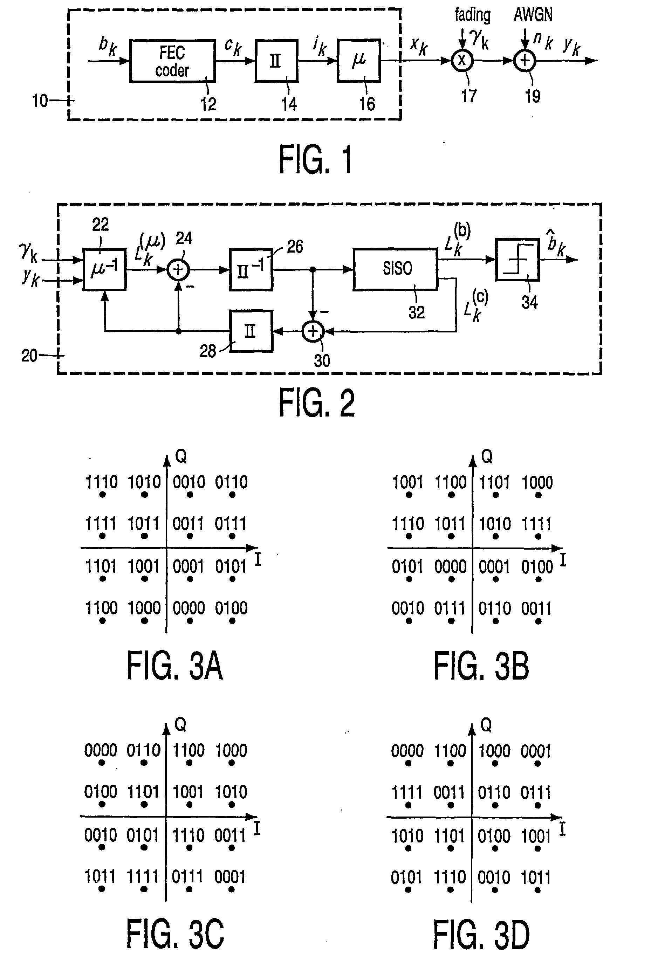

In transmission systems employing so-called bit interleaved coded modulation (BICM) schemes a sequence of coded bits is interleaved prior to being encoding to channel symbols. Thereafter, these channels symbols are transmitted. A schematic diagram of a transmitter 10 which may be used in such a transmission system is shown in Fig. 1. In this transmitter 10 a signal comprising a sequence of information bits $\{b_k\}$ is encoded in a Forward Error Control (FEC) encoder 12. Next, the encoded signal $\{c_k\}$ (i.e. the output of the encoder 12) is supplied to an interleaver 14 which interleaves the encoded signal by permuting the order of the incoming bits $\{c_k\}$. The output signal $\{i_k\}$ of the interleaver 14 (i.e. the interleaved encoded signal) is then forwarded to a mapper 16 which groups the incoming bits into blocks of $m$ bits and maps them to a symbol set consisting of $2^m$ signal constellation points with corresponding labels. The resulting sequence of symbols $\{x_k\}$ is a multilevel signal which is transmitted by the transmitter 10 over a memoryless fading channel to a receiver 20 as shown in Fig. 2. In Fig. 1 the memoryless fading channel is modeled by the concatenation of a multiplier 17 and an adder 19. The memoryless fading channel is characterized by a sequence of gains $\{\gamma_k\}$ which are applied to the transmitted multilevel signal by means of the multiplier 17. Furthermore, the samples of the transmitted multilevel signal are corrupted by a sequence $\{n_k\}$ of Additive White Gaussian Noise (AWGN) components which are added to the multilevel signal by means of the adder 19. This generic channel model fits, in particular, multicarrier transmission over a frequency selective channel, where the set of instances $k = 1,...,N$ corresponds to $N$ subcarriers. Therefore, it falls under the scope of the existing standards for broadband wireless (such as ETSI BRAN HIPERLAN/ 2, IEEE 802.11 a and their advanced versions currently being in standardization). The main distinguishing feature of BICM schemes is the interleaver 14 which spreads the adjacent encoded bits $c_k$ over different symbols $x_k$, thereby providing the diversity of fading gains $\gamma_k$ within a limited interval of the sequence $\{c_k\}$ of coded bits. This yields a substantial improvement in the FEC performance in fading environments. (Pseudo-)random interleavers may be used that for big block size $N$ guarantee a uniform spreading and therefore a uniform diversity over the whole coded sequence. Alternatively, row-column interleavers may be used.

It is now assumed that the receiver 20 has a perfect knowledge of the fading gains $\{\gamma_k\}$. This assumption is valid as in practice these gains can be determined very accurately (e.g. by means of pilot signals and/or training sequences). The standard decoding of a BICM-encoded signal has a mirror structure to the structure of the transmitter 10 as shown in Fig. 1. For each k, the received samples $y_k$ and the fading gains $\gamma_k$ are used to compute the so-called a posteriori probabilities (APP) of all $2^m$ signal constellation points for $x_k$. These APP values are then demapped, i.e. transformed to reliability values of individual bits of the $k$-th block. The reliability value of a bit may be computed as a log-ratio of the APP of this bit being 0 over the APP of this bit being 1, given the set of APP values of $2^m$ constellation points for the $k$-th block. Sometimes the APP of a bit being 0 or 1 is replaced by the bitwise maximum likelihood (ML) metrics, i.e. the largest APP over the constellation points matching this bit value. In this way the numerical burden can be reduced. These reliability values are deinterleaved and forwarded to a FEC decoder which estimates the sequence of information bits, e.g. by means of standard Viterbi decoding.

The main drawback of this standard decoding procedure, as compared to the (theoretically possible but impractical) optimal decoding comes from the fact that there is no simultaneous use of the codeword structure (imposed by FEC) and the mapping structure. Although the strictly optimal decoding is not feasible, the above observation gives rise to a better decoding procedure that is illustrated in the receiver 20 as shown in Fig. 2. The basic idea of this procedure is to iteratively exchange the reliability information between the demapper 22 and the FEC decoder 32. The iterative procedure starts with the standard demapping as described above. The reliability values $\left\{ L_k^{(\mu)} \right\}$ of the demapped bits, after deinterleaving by a deinterleaver 26, serve as the inputs to a soft-input soft-output (SISO) decoder 32 which produces the (output) reliabilities $\left\{ L_k^{(c)} \right\}$ of the coded bits $\{c_k\}$ that take into account the (input) reliabilities of the demapped bits and the FEC structure. The standard SISO decoders are maximum a posteriori (MAP) decoders, a simplified version of which is known as a max-log-MAP (MLM) decoder. The difference between the inputs and the outputs of the SISO decoder 32 (often referred to as extrinsic information) is determined by a subtracter 30 and reflects the reliability increment which is the result of the code structure. This differential reliability is interleaved by an interleaver 28 and used as an a priori reliability during the next demapping iteration. In a similar way, the differential reliability is computed at the successive demapper output (by means of subtracter 24). This reliability represents a refinement due to the reuse of the mapping and signal constellation structure; it is used as an a priori reliability for the subsequent SISO decoding iteration. After the last iteration, the SISO output reliabilities $\left\{ L_k^{(b)} \right\}$ of the information bits are fed to a slicer 34 to produce final decisions $\{\hat{b}_k\}$ on the information bits.

An important feature of the BICM scheme is the mapping of bits according to a signal constellation comprising a number of signal points with corresponding labels. The most commonly used signal constellations are PSK (BPSK, QPSK, up to 8-PSK) and 4-QAM, 16-QAM, 64-QAM and sometimes 256-QAM. Furthermore, the performance of the system depends substantially on the mapping design, that is, the association between the signal points of the signal constellation and their $m$-bit labels. The standard Gray mapping is optimal when the standard (non-iterative) decoding procedure is used. Gray mapping implies that the labels corresponding to the neighboring constellation points differ in the smallest possible number of $m$ positions, ideally in only one. An example of a 16-QAM signal constellation with the Gray mapping ($m$ = 4) is shown in Fig. 3A. It can easily be seen that the labels of all neighboring signal points differ in exactly one position.

However, the use of alternative mapping designs or mappings may improve dramatically on the performance of BICM schemes whenever any version of the iterative decoding is exploited at the receiver. In European patent application number 0 948 140 an iterative decoding scheme as shown in Fig. 2 is used with what is referred to as anti-Gray encoding mapping. It is however not clear what is meant by this anti-Gray encoding mapping. In a paper entitled "Trellis-coded modulation with bit interleaving and iterative decoding" by X. Li and J. Ritcey, IEEE Journal on Selected Areas in Communications, volume 17, pages 715 to 724, April 1999, a noticeable performance improvement is achieved by means of a widely used mapping design known as the Set Partitioning (SP) mapping. An example of a 16-QAM signal constellation with the SP mapping is shown in Fig. 3B.

In European patent application number 0 998 045 and European patent application number 0 998 087 an information-theoretic approach to mapping optimization is disclosed. The core idea of this approach is to use a mapping that reaches the optimal value of the mutual information between the label bits and the received signal, averaged over the label bits. The optimal mutual information depends on the signal-to-noise ratio (SNR), the design number of iterations of the decoding procedure as well as on the channel model. The optimal value of the mutual information is the value that minimizes the resulting error rate. According to this approach, selection of the optimal mappings relies upon simulations of error rate performance versus the aforementioned mutual information for a given SNR, number of iterations and channel model, with the subsequent computation of mutual information for all candidate mappings. Such a design procedure is numerically intensive. Moreover, it does not guarantee optimal error rate performance of the system. Besides the standard Gray mapping, in these European patent applications two new mappings for 16-QAM signal constellations are proposed (which mappings will be referred to as optimal mutual information (OMI) mappings). 16-QAM signal constellations with these OMI mappings are shown in Figs. 3C and 3D.

It is an object of the invention to provide an improved transmission system for transmitting a multilevel signal from a transmitter to a receiver. This object is achieved in the transmission system according to the invention, said transmission system being arranged for transmitting a multilevel signal from a transmitter to a receiver, wherein the transmitter comprises a mapper for mapping an input signal according to a signal constellation onto the multilevel signal, and wherein the receiver comprises a demapper for demapping the received multilevel signal according to the signal constellation, wherein the signal constellation comprises a number of signal points with corresponding labels, and wherein $D_a > D_f$, with $D_a$ being the minimum of the Euclidean distances between all pairs of signal points whose corresponding labels differ in a single position, and with $D_f$ being the minimum of the Euclidean distances between all pairs of signal points. The Euclidean distance between two signal points is the actual ('physical') distance in the signal space between these two signal points. By using a signal constellation with a $D_a$ which is larger than $D_f$ a substantially lower error rate can be reached than by using any of the prior art signal constellations. Ideally, $D_a$ is as large as possible (i.e. $D_a$ has a substantially maximum value), in which case the error rate is as low as possible. $D_a$ is referred to as the effective free distance of the signal constellation and $D_f$ is referred to as the exact free distance of the signal constellation.

It is observed that iterative decoding procedures approach the behavior of an optimal decoder when the SNR exceeds a certain threshold. This means that at a relatively high SNR (that ensures a good performance of the iterative decoding) one may assume that an optimal decoder is performing the decoding.

Consider an optimal decoder. In practice, trellis codes are used as FEC for noisy fading channels such as (concatenated) convolutional codes. A typical error pattern is characterized by a small number of erroneous coded bits $\{c_k\}$ at error rates of potential interest. The number of erroneous coded bits is typically a small multiple of the free distance of the code; this number is only a small fraction of the total number of coded bits. The free distance of a code is the minimum number of bits (bit positions) in which two different codewords of the code can differ. Due to interleaving, these erroneous coded bits are likely to be assigned to different labels and therefore different symbols. More specifically, the probability of having only one erroneous coded bit per symbol approaches one along with the increase of the data block size.

Hence, the overall error rate (for error rates of potential interest) is improved when the error probability is decreased for such errors that at most one bit per symbol is corrupted. This situation can be reached by maximizing the minimum $D_a$ of the Euclidean distances between all pairs of signal points whose corresponding labels differ in a single bit position.

In an embodiment of the transmission system according to the invention $\overline{H_1}$ has a substantially minimum value, with $\overline{H_1}$ being the average Hamming distance between all pairs of symbols corresponding to neighboring signal points. The Hamming distance between two labels is equal to the number of bits (bit positions) in which the labels differ. By this measure, an accurate decoding of the multilevel signal in the receiver is reached at a relatively small SNR. A typical feature of iterative decoding is a relatively poor performance up to some SNR threshold. After this threshold, the error rate of the iterative decoding approaches the performance of an optimal decoder quite soon, along with the increase of the SNR. It is therefore desirable to decrease this SNR threshold value. This threshold value depends on the starting point of the iterative procedure, i.e. on the distribution of the reliability values $L_k^{(\mu)}$ provided by the demapper on the first iteration. The worst reliability values are due to the neighboring signal points, therefore the 'average' number of coded bits that suffer from these poor reliabilities is proportional to the 'average' number of positions in which the labels, which correspond to the neighboring signal points, are different. In other words, the SNR threshold degrades (i.e. increases) along with the increase of the average Hamming distance between the labels that are assigned to the neighboring signal points. Ideally, $\overline{H_1}$ is as small as possible, i.e. $\overline{H_1}$ has a minimum value, for which value of $\overline{H_1}$ the SNR threshold will also be minimal.

The above object and features of the present invention will be more apparent from the following description of the preferred embodiments with reference to the drawings, wherein:

Fig. 1 shows a block diagram of a transmitter according to the invention,
Fig. 2 shows a block diagram of a receiver according to the invention,
Figs. 3A to 3D show prior-art 16-QAM signal constellations,
Fig. 4 shows graphs illustrating the packet error rate versus $E_b/N_o$ (i.e. the SNR per information bit) for several 16-QAM mappings,
Fig. 5 shows graphs illustrating the bit error rate versus $E_b/N_o$ for several 16-QAM mappings,
Fig. 6 shows graphs illustrating the packet error rate versus $E_b/N_o$ for a standard 8-PSK signal constellation and for a modified 8-PSK signal constellation,
Fig. 7 shows graphs illustrating the bit error rate versus $E_b/N_o$ for a standard 8-PSK signal constellation and for a modified 8-PSK signal constellation,
Figs. 8A to 8G show improved 16-QAM signal constellations,
Figs. 9A to 9C and Fig. 10 show improved 64-QAM signal constellations,
Figs. 11A and 11B show improved 256-QAM signal constellations,
Figs. 12A to 12C show improved 8-PSK signal constellations,
Fig. 13 shows a modified 8-PSK signal constellation.

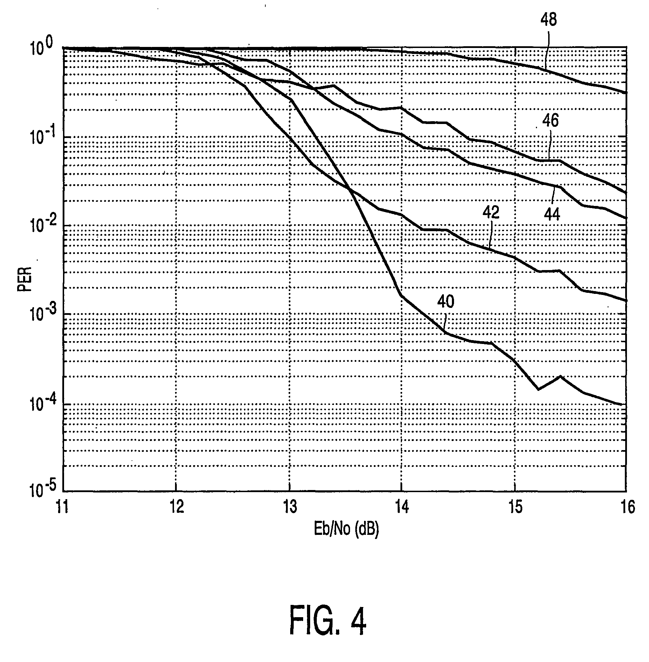

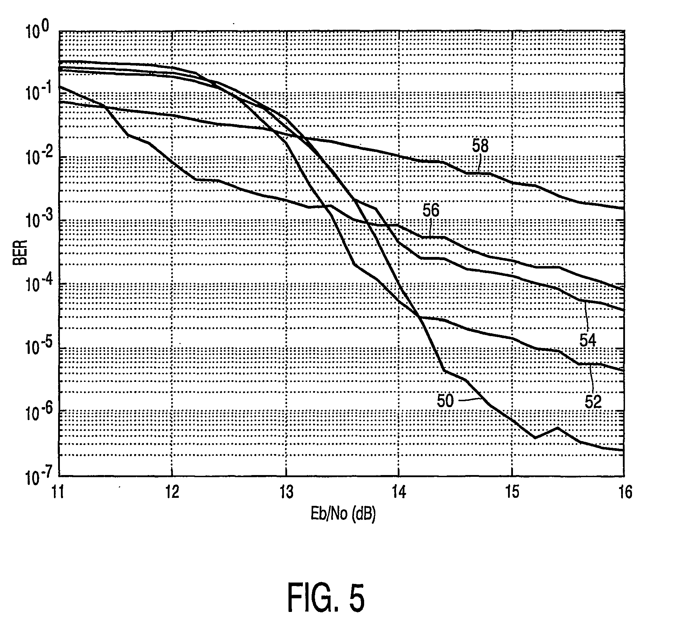

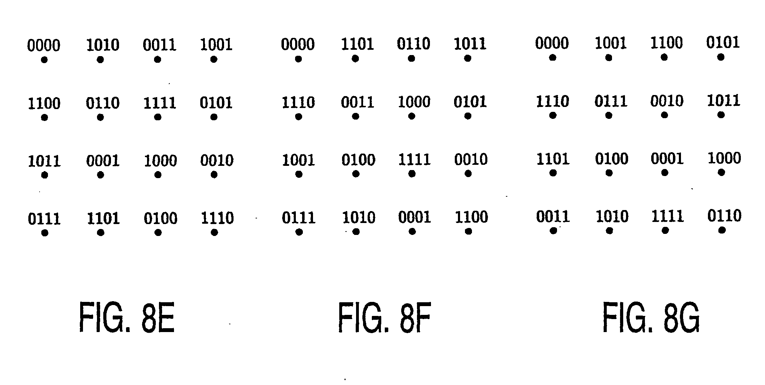

In the Figs, identical parts are provided with the same reference numbers.

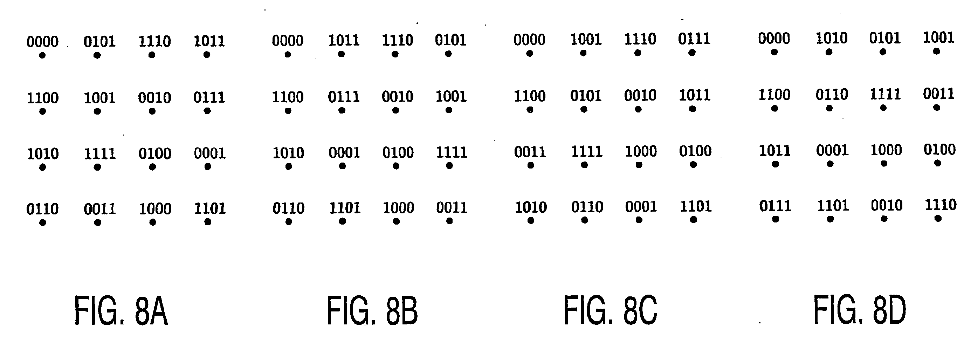

In Figs 8A to 8G, 9A to 9C, 10, 11A and 11B no horizontal I-axis and vertical Q-axis are shown. However, in these Figs. a horizontal I-axis and a vertical Q-axis must be considered to be present, which I-axis and Q-axis cross each other in the center of each Fig. (similar to the situation as shown in Figs. 3A to 3D).
The transmission system according to the invention comprises a transmitter 10 as shown in Fig. 1 and a receiver 20 as shown in Fig. 2. The transmission system may comprise further transmitters 10 and receivers 20. The transmitter 10 comprises a mapper 16 for mapping an input signal $i_k$ according to a certain signal constellation onto a multilevel signal $x_k$. A multilevel signal comprises a number of groups of m bits which are mapped onto a real or complex signal space (e.g. the real axis or the complex plane) according to a signal constellation. The transmitter 10 transmits the multilevel signal $x_k$ to the receiver 20 over a memoryless fading channel. The receiver 20 comprises a demapper 22 for demapping the received multilevel signal $(y_k)$ according to the signal constellation. The signal constellation comprises a number of signal points with corresponding labels. The (de)mapper is arranged for (de)mapping the labels to the signal constellation points such that $D_a > D_f$, with $D_a$ being the minimum of the Euclidean distances between all pairs of signal points whose corresponding labels differ in a single position (these labels may be referred to as Hamming neighbors), and with $D_f$ being the minimum of the Euclidean distances between all pairs of signal points. Such a mapping is referred to as a far neighbor (FAN) mapping.
Now the error rate performance of an iteratively decoded BICM scheme using the prior-art signal constellations as shown in Figs 3A to 3D will be compared with the error rate performance of an iteratively decoded BICM scheme using the 16-QAM FAN signal constellation as shown in Fig. 8E. The FEC coder 12 makes use of the standard 8-state rate (1/2) recursive systematic convolutional code with the feed-forward and feedback polynomials $15_8$ and $13_8$, respectively. A sequence of 1000 information bits produces, after encoding, random interleaving and mapping, a set of $N = 501$ symbols of 16-QAM that are transmitted over a Rayleigh channel with mutually independent gains $\{\gamma_k\}$. Note that this scenario fits a broadband multicarrier BICM scheme with a very selective multipath channel. At the receiver 20, an iterative decoding procedure is applied according to the scheme as shown in Fig. 2. In this example we use simplified (ML) reliability metrics for the demapping, along with a standard MLM SISO decoder. A pseudo-random uniform interleaver has been used. The simulation results are shown in Figs. 4 and 5. Fig. 4 shows the packet error rate (PER) versus $E_b/N_o$ and Fig. 5 shows the bit error rate versus $E_b/N_o$. As expected, the signal constellation of Fig. 3A with the Gray mapping gives the worst results at desirably low error rates (see graphs 48 and 58). The state-of-the art signal constellation with SP mapping as shown in Fig. 3B improves substantially on this result (see graphs 44 and 54). The signal constellation with OMI mapping according to Fig. 3C (see graphs 46 and 56) has a poor packet error rate as compared to the signal constellation with SP mapping. However, the signal constellation with OMI mapping of Fig. 3D (see graphs 42 and 52) improves substantially on the SP mapping. The signal constellation with FAN mapping as shown in Fig. 8E (see graphs 40 and 50) provides a 2 dB gain at low error rates (specifically at PER $\leq 10^{-3}$) over the best of the prior-art signal constellations.

The effective free distance $D_a$ is the minimum of the Euclidean distances taken over all pairs of signal points whose labels differ in one position only. Note that $D_a$ is lower bounded by the exact free distance $D_f$ which is the minimum Euclidean distance over all pairs of signal points. $\bar{H}_1$ is defined as the average Hamming distance between the pairs of labels assigned to neighboring signal points (i.e. the signal points that are separated from each other by the minimum Euclidean distance $D_f$). Now $\bar{H}_1$ is defined as the average Hamming distance between all pairs of labels assigned to the $l$-th smallest Euclidean distance. By the $l$-th smallest Euclidean distance, the $l$-th element of an increasing sequence is meant, which sequence consists of all Euclidean distances between the signal points of a given constellation. Note that such a definition of $\bar{H}_1$ is consistent with the definition of $\bar{H}_1$. In some cases, joint optimization of the first criterion (i.e. having a $D_a$ which is as big as possible but at least larger than $D_f$) and the second criterion (i.e. having a substantially minimum $\bar{H}_1$) yields a set of solutions and some of them have different $\bar{H}_l$ for some $l > 1$. In such cases, the set of solutions may be reduced in the following way. For each $l$ increasing from 1 to $m$, only the solutions that provide the minimum of $\bar{H}_l$ are retained. This approach reduces the SNR threshold of the iterative decoding process.

All possible signal constellations may be grouped into classes of equivalent signal constellations. The signal constellations from the same equivalence class are characterized by the same sets of Euclidean and Hamming distances. Therefore all signal constellations of a given equivalence class are equally good for our purposes.

There are some obvious ways to produce an equivalent signal constellation to any given signal constellation. Moreover, the total number of equivalent signal constellations that may be so easily inferred from any given signal constellation is very big. The equivalence class of a given signal constellation is defmed as a set of signal constellations that is obtained by means of an arbitrary combination of the following operations:

    (a) choose an arbitrary binary $m$-tuple and add it (modulo 2) to all labels of the given signal constellation;
    (b) choose an arbitrary permutation of the positions of $m$ bits and apply this permutation to all the labels;

    (c) for any QAM constellation, rotate all signal points together with their labels by $l\dfrac{\pi}{2}$, $1 \leq l \leq 3$;

    (d) for any QAM constellation, swap all signal points together with their labels upside down, or left to the right, or around the diagonals;
    (e) for PSK, rotate all signal points together with their labels by an arbitrary angle.

A smart algorithm has been designed to accomplish the exhaustive classification of all possible signal constellations for 16-QAM for which $D_a$ has a maximum value. This exhaustive search resulted in seven signal constellations which are shown in Figs. 8A to 8G. It is easy to show that all these signal constellations achieve the maximum possible effective free distance $D_a$ which equals $\sqrt{5}D_f$. Note that all the prior-art signal constellations only achieve $D_a = D_f$.

In terms of the second criterion (i.e. having a substantially minimum $\bar{H}_1$), the signal constellations of Figs. 8A to 8G have the respective $\bar{H}_1$ values $\left\{2\dfrac{1}{6}, 2\dfrac{1}{3}, 2\dfrac{1}{3}, 2\dfrac{1}{3}, 2\dfrac{1}{6}, 3, 2\dfrac{1}{3}\right\}$. Note that the signal constellations of Figs. 8A and 8E yield the minimum of $\bar{H}_1$. Moreover, it can be shown that for 16-QAM, $\overline{H}_1 = 2\dfrac{1}{6}$ is the minimum possible $\bar{H}_1$

that may be achieved whenever $D_a > D_f$. Therefore, the signal constellations of Figs. 8A and 8E (and the signal constellations belonging to the equivalence classes thereof) jointly optimize both criteria under the condition $D_a > D_f$.

Since the total number of signal constellations grows very fast along with increasing m (For example, the total number of signal constellations is $2.1 \cdot 10^{13}$, $2.6 \cdot 10^{35}$ and $1.3 \cdot 10^{89}$, respectively, for $m = 4, 5$ and 6, respectively) the exhaustive search for the best signal constellation is not feasible for $m > 4$. In such cases, an analytic construction should be found that allows to either simplify the exhaustive search or to restrict ourselves to a limited set of signal constellations that contain 'rather good' ones.

As a matter of fact, $2^m$-QAM is almost the only signaling which is practically used for $m \geq 4$. For this signaling, with even $m$, we specify a family of linear signal constellations as follows:

Let $m=2r$, then the $2^m$-QAM signaling represents a regular two-dimensional grid with $2^r$ points in the vertical and horizontal dimensions. A set of labels $\{L_{i,j}\}_{1 \leq i,j \leq 2^r}$ is defined wherein $L_{i,j}$ is a binary $m$-tuple that stands for the label of the signal point with the vertical coordinate $i$ and the horizontal coordinate $j$. A signal constellation will be called linear if and only if

$$L_{1,1} = O_m, \qquad L_{i,j} = L_{i,1} \oplus L_{1,j}, \quad 1 \leq i,j \leq 2^r \qquad (1)$$

wherein $O_m$ is the all-zero $m$-tuple and $\oplus$ denotes the modulo 2 addition.

This family of signal constellations is of interest because of the observation that all the signal constellations in the Figs. 8A-8G, except for the signal constellations in the Figs. 8B and 8C, appear to be linear. These linear signal constellations as well as the following sub-family of linear signal constellations may also be constructed without applying the above mentioned (first and second) design criteria.

A sub-family of linear signal constellations can be obtained via the following equation:

$$L_{i,1} = X_i A, \qquad L_{j,1} = Y_i A, 1 \leq i,j \leq 2^r \qquad (2)$$

where $\{X_i\}_{1 \leq i \leq 2^r}$ and $\{Y_j\}_{1 \leq j \leq 2^r}$ are two arbitrary sets of binary $m$-tuples and $A$ is an arbitrary $m \times m$ matrix with binary inputs which is an invertible linear mapping in the $m$-dimensional linear space defined over the binary field with the modulo 2 addition.

The use of (2) allows to confine the exhaustive search over all possible linear signal constellations to a search over the sets $\{X_i\}$, $\{Y_j\}$. For a given pair of sets $\{X_i\}$, $\{Y_j\}$ and the desired $D_a$, a suitable $A$ can easily be determined.

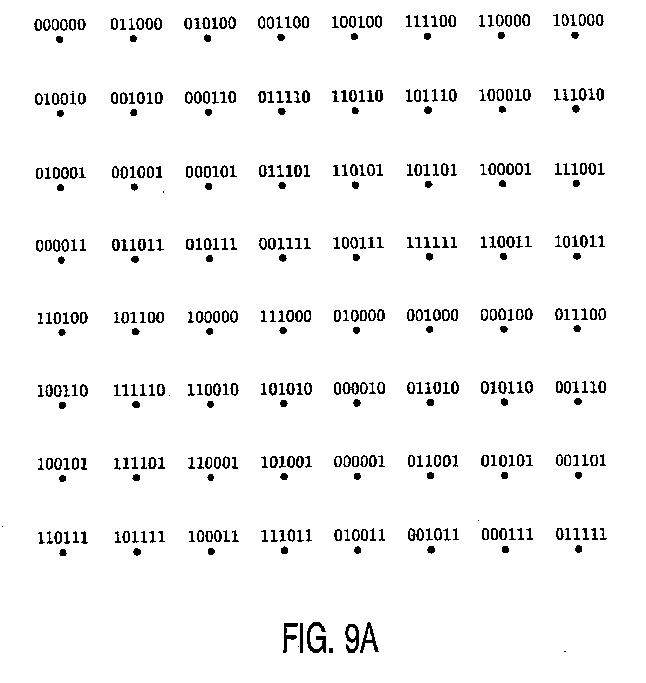

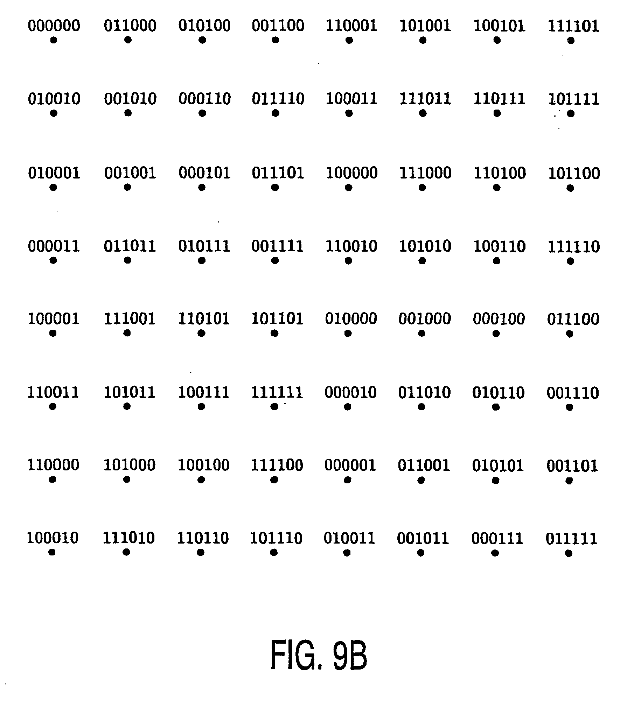

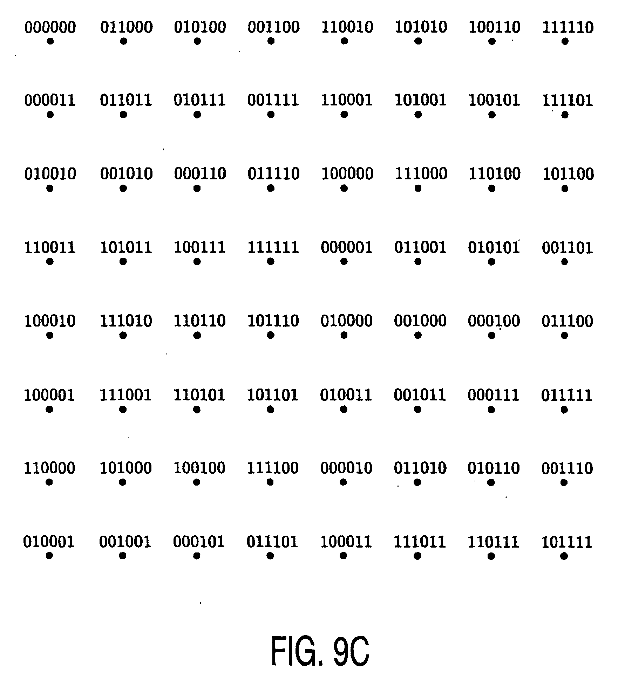

An exhaustive search within the sub-family (2) for 64-QAM led to the following results: 12 equivalence classes were found with $D_a = \sqrt{20} D_f$, which is the upper bound on $D_a$ for 64-QAM. The further minimization of $\bar{H}_1$ reduced this set to 3 equivalence classes. All these classes achieve $\overline{H}_1 = 2\dfrac{3}{14}$. The corresponding signal constellations are shown in Figs. 9A to 9C.

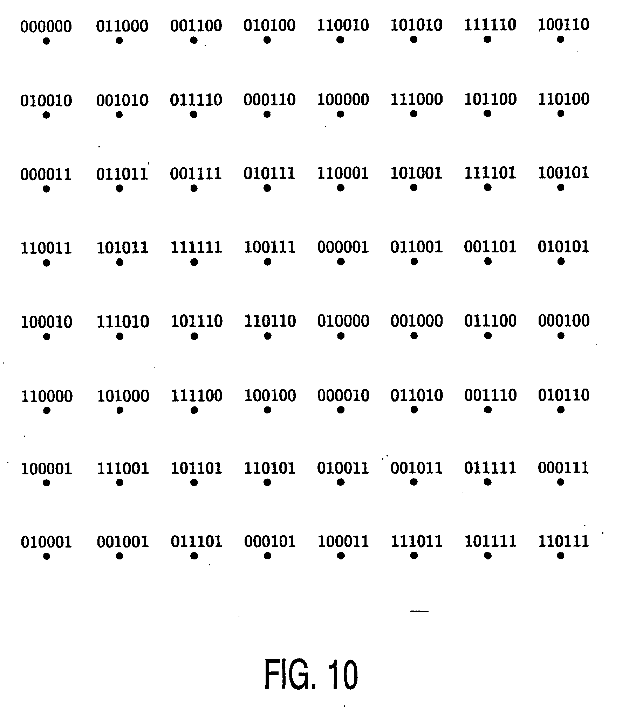

Within the sub-family (2) signal constellations were searched that minimize $\bar{H}_1$ under the condition $D_a > D_f$. For 64-QAM the theoretical minimum of $\bar{H}_1$ is defined by the lower bound $\overline{H}_1 \geq 2\dfrac{1}{14}$. No signal constellations with $\overline{H}_1 < 2\dfrac{3}{14}$ were found for $D_a > \sqrt{17} D_f$. For $D_a = \sqrt{17} D_f$ there are 57 equivalence classes with $\overline{H}_1 = 2\dfrac{1}{14}$. Among those, a unique equivalence class was found that minimizes $\bar{H}_2$. This class achieves $\overline{H}_2 = 2\dfrac{13}{49}$; it is shown in Fig. 10

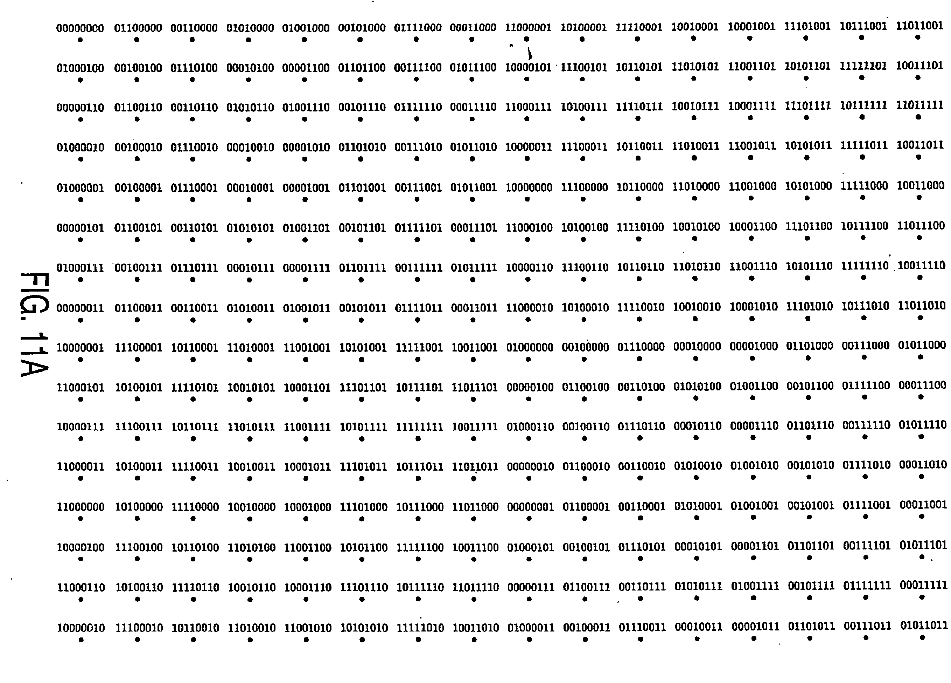

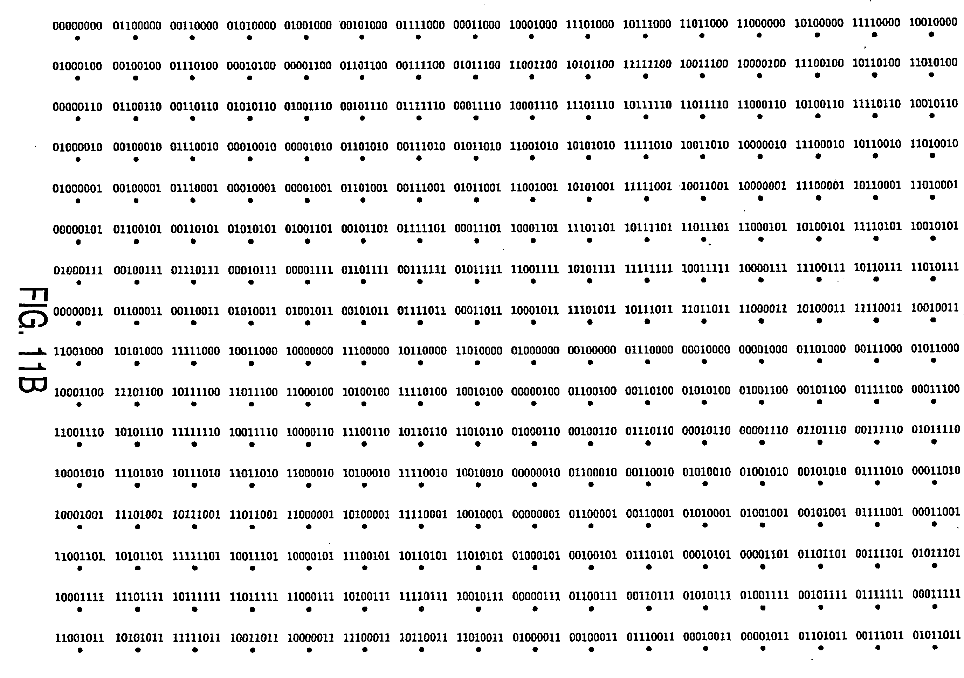

The following material on linear signal constellations is related to various signal constellations for $r > 3$. For those cases, it was not possible to classify all possible signal constellations nor to establish the upper bound on $D_a$. For 256-QAM, a limited search within the sub-family (2) of linear signal constellations led us to a set of 16 equivalence classes that achieve $\mathbf{D_a} = \sqrt{80} D_f$ and $\overline{H}_1 = 2\frac{1}{10}$. Among these 16 classes, we retained only two classes that minimize $\overline{H}_2$, achieving thereby $\overline{H}_2 = 2\frac{59}{75}$. Their respective signal constellations are given in Figs 11A and 11B.

For the general case of $2^{2r}$-QAM, a sub-set of (2) was designed with which the effective free distance

$$D_a \geq \sqrt{5}\, 2^{r-2} D_f \qquad\qquad (3)$$

can be reached. This particular construction is described now. First of all, we restrict ourselves to the sets of $\{X_i\}_{1\leq i\leq 2^r}$ and $\{Y_j\}_{1\leq j\leq 2^r}$ such that:

(a) the first $r$ bits of $X_i$ represent ($i$-1) in a binary notation whereas the following $r$ bits are zeros.
(b) the first $r$ bits of $Y_j$ are zeros whereas the following $r$ bits represent ($j$-1) in a binary notation.

For sake of simplicity, this selection of $\{X_i\}$ and $\{Y_j\}$ will be referred to as lexico-graphical. For 64-QAM ($m = 6$, $r = 3$), the lexico-graphical sets are as follows: $\{X_1, X_2,...X_8\}$ = {000000,001000,010000,011000,100000,101000,110000,111000 } $\{Y_1, Y_2,...Y_8\}$ = {000000,000001,000010,000011,000100,000101,000110,000111}

The advantage of the lexico-graphical selection is twofold. First, it ensures that $(X_i + Y_j) \neq 0_m$, for all $1\leq i,j \leq 2^r$ except for $i=j=1$, thereby ensuring that all $L_{i,j}$ are different. Second, it allows to easily find $A$ that satisfies (3). To do that, we need to ensure that for every pair $(L_{i,j}, L_{i',j'})$ such that $(L_{i,j} \oplus L_{i',j'})$ has only one non-zero bit, the corresponding signal points are at least $D_a$ apart. Note that the total number of binary $m$-tuples having only one non-zero bit is $m$. These labels are represented by the rows of the $m \times$ m identity matrix $I_m$ such that $(I_m)_{ii} = 1$ for all $i$ and the other elements of $I_m$ are zeros. Due to the linearity conditions (1) and (2), we have $(L_{i,j} \oplus L_{i',j'})= ((X_i \oplus X_{i'}) \oplus (Y_j \oplus Y_{j'}))A$ for all $1 \leq i,j \leq 2^r$. Once again due to linearity, the matrix $A$ can be uniquely defined by the equation

$$_m = Z\,A, \text{ where } \quad Z = \{Z_1^T .. Z_m^T\}^T \qquad\qquad (4)$$

is a $m \times m$ matrix with binary inputs which is an invertible linear mapping in the $m$-dimensional linear space defined over the binary field with the modulo 2 addition (here ($^T$) denotes matrix transpose). We need to select m linearly independent $m$-tuples (row vectors) $Z_i$ such that (3) is satisfied.

Of interest are all possible signal constellations that satisfy (1), (2) and (4) with $\{Z_i\}_{1\leq i\leq m}$ chosen so as to meet (3). According to (4), $A$ will be given by the inverse of $Z$ which, along with the lexico-graphical selection of $\{X_i, Y_j\}$, (1) and (2), specifies a signal constellation for the desired equivalence class.

Let us specify one particular selection of $\{Z_i\}_{1\leq i\leq m}$ and show that (3) holds: choose the set of $\{Z_i\}$ as an arbitrary ordering of all possible $m$-tuples that have 2 or 3 non-zero entries of which 2 (mandatory) non-zero entries are always at the first and the (r +1) -st position. Check that there are exactly $m$-tuples and that all they are linearly independent so that $Z$ is invertible. We now show that (3) holds. Assume that $L_{i,j}, L_{i',j'}$ are two arbitrary labels that differ in one position only. Consequently,

$$L_{i,j} \oplus L_{i',j'} = (I_m)_l, \qquad\qquad (5)$$

i.e. the $l$-th row of $I_m$, for some $l$ from {1,2,...,m}. According to (1) and (2), we may write

$$L_{i,j} \oplus L_{i',j'} = ((X_i \oplus X_{i'}) \oplus (Y_j \oplus Y_{j'}))A \qquad\qquad (6)$$

Taking into account (4), (5), (6) and the fact that A is invertible, we find

$$\left(X_i \oplus X_{i'}\right) \oplus \left(Y_j \oplus Y_{j'}\right) = Z_i \tag{7}$$

Recall that, according to the lexico-graphical ordering, all $X_i$ ($Y_j$) have zeros within the first (last) $r$ positions. Let us inspect the spacings between the pairs *(i,j) (i',j')* of signal points that satisfy (7) with the aforementioned selection for $\{Z_i\}$. First, consider the single possible *m*-tuple with only 2 mandatory non-zero entries. Check that (7) yields

$$\left(X_i \oplus X_{i'}\right) = 1 \overbrace{00...0}^{(r-1)times} \overbrace{00...0}^{(r)times}, \qquad \left(Y_j \oplus Y_{j'}\right) = \overbrace{00...01}^{(r)times} \overbrace{00...0}^{(r-1)times}$$

$$\left(X_i \oplus X_{i'}\right)$$

Note that the first *r*-bits of $(X_i \oplus X_{i'})$ and the last *r*-bits of $(Y_j \oplus Y_{j'})$ read $2^{r-1}$ in binary notation. According to the lexico-graphical selection of $\{X_i\}$ and $\{Y_j\}$, the corresponding signal points *(i,j) (i',j')* have vertical and horizontal offsets of $2^{r-1}$ positions. The resulting Euclidean distance between these points is composed of vertical and horizontal distances of $2^{r-1}D_f$.

Now, consider all *m*-tuples with 3 non-zero entries such that the third (non-mandatory) entry is one of the first *r* entries. We have

$$\left(X_i \oplus X_{i'}\right) = 1 \overbrace{??...?}^{(r-1)times} \overbrace{00...0}^{(r)times}, \qquad \left(Y_j \oplus Y_{j'}\right) = \overbrace{00...01}^{(r)times} \overbrace{00...0}^{(r-1)times},$$

where 1??...? has one non-zero entry within the last (*r*- 1) entries. Using again the properties of the lexico-graphical selection, one can show that this yields a vertical offset of at least $\frac{1}{2}2^{r-1} = 2^{r-2}$ between the signal points *(i,j) (i',j')* whereas the horizontal offset remains $2^{r-1}$. Clearly, the role of vertical/horizontal offsets exchange when we consider such $Z_i$ that the third (non-mandatory) entry is one of the last *r* entries.

We see that, in all situations, the Euclidean distance between the signal points, whose labels differ in one position only, is composed of vertical and horizontal distances so that one of them equals $2^{r-1} D_f$ and the other one is not less than $2^{r-2} D_f$. Consequently, the minimum of the total Euclidean distance between such points satisfies

$$D_a \geq \sqrt{\left(2^{r-1}D_f\right)^2 + \left(2^{r-2}D_f\right)^2} = 2^{r-2}D_f\sqrt{2^2+1} = \sqrt{5}\,2^{r-2}D_f \tag{8}$$

The non-linear family of signal constellation classes described hereafter may be seen as an extension of the linear family (1). This family comes from the equivalence classes (b) and (c) of all possible optimal classes for 16-QAM, (see Figs. 8A to 8G) that do not fall within the linear family. We noticed that the equivalence classes (b) and (c) may be regarded as being part of the family defined below.

Let *S* be a set of binary *m*-tuples that is closed under the (modulo 2) addition. We define an extension of the family of Fig. 8 as a collection of all equivalence classes of signal constellations having a set of labels $\{L_{i,j}\}_{1 \leq i, j \leq 2^r}$ satisfying

$$L_{i,j} = 0_m, \qquad L_{i,j} = L_{i,1} \oplus L_{1,j} \oplus f\left(L_{i,1} \oplus L_{1,j}\right), \quad 1 \leq i,j \leq 2^r \tag{9}$$

where *f* is a mapping from the set of *m*-tuples into itself such that firstly, for any *m*-tuple *x* from *S*, *f(x) is* also in *S* and secondly, $f(x) = f(y)$ for any $m$-tuples $x, y$ such that $(x \oplus y)$ is in $S$.

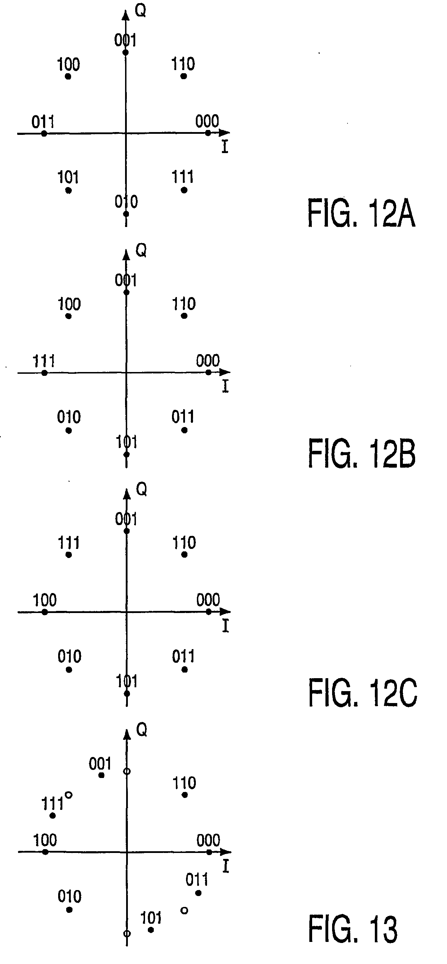

For 8-PSK, an exhaustive search was used to find the set of appropriate signal constellations. Apparently, there exist only three equivalence classes that satisfy $D_a > D_f$. These classes achieve $D_a \approx 1.84776 D_f$ and one of those has $\overline{H}_1 = 2\dfrac{1}{2}$ while the remaining two achieve $\overline{H}_1 = 2\dfrac{1}{4}$ The corresponding signal constellations are shown in Figs 12A to 12C.

The success of the new strategy is based on the fact that coded bits are interleaved in such a way that the erroneous bits stemming from (typical) error events end up in different labels with a high probability. This property is ensured statistically when a random interleaver is used with a very big block size $N$. However, the probability of having more than one erroneous bit per label/symbol is different from zero when $N$ is finite.

This observation leads to the following undesirable effect: the error floor (*i.e.*, the error rate flattening region) will be limited by a non-negligible fraction of error events that are characterized by more than one erroneous bit per label. In such cases, the potential gain due to high $D_a$ will not be realized.

There exists a simple way to overcome the impact of such undesirable error events: the interleaver 14 should ensure that, for every label, the smallest number of the trellis sections (of the underlying FEC) between all pairs of the channel bits contributing to this label, is not less than a certain $\delta > 0$.

Such a design criterion ensures that a single error event may result in multiple erroneous bits per label if and only if this error event spans at least $\delta$ trellis sections. For big $\delta$, the corresponding number of erroneous bits of this error event approximately equals $(\delta / 2R)$, where $R$ is the FEC rate. By choosing $\delta$ big enough, we increase the Hamming distance of such undesirable error events thereby making them virtually improbable. Thus, choosing $\delta$ big allows us to control the error floor irrespectively to the block size $N$. In our simulations a uniform random interleaver was used that satisfies this design criterion with $\delta \geq 25$.

The following result is based on our earlier observation that the effective free distance $D_a$ of a BICM scheme may be substantially bigger than the exact free distance $D_f$, provided that FEC with interleaving and an appropriate signal constellation (i.e. having a $D_a$ which is larger than $D_f$) is used. Hence, it makes sense to design signal constellations that aim at increasing $D_a$ rather than $D_f$.

This is supported by the following example. A new signal constellation is derived from the standard 8-PSK signal constellation. Let us consider an instance of the new strategy represented by the signal constellation as depicted in Fig. 12C. A standard 8-PSK signal constellation is characterized by

$$D_a^{8-PSK} = \left(1 - \cos\left(\pi / 4\right)\right)^{-1/2} D_f^{8-PSK} \approx 1.84776 D_f^{8-PSK} .$$ It can easily be seen that this minimum distance is defined by the distances between the signal points within the pairs labeled (000,001), (110,111), (100,101) and (010,011). Indeed, these are the only pairs such that the signal points are separated by the (minimum) rotation of $(\pi/2)$ and their labels differ in one position. Note that $D_a$ may be increased, *e.g.,* by simply rotating (note that rotation preserves a highly desirable constant envelope property of PSK) the signal points labeled {001,111,101,011} (i.e. the second label within each pair) leftwise with a rotation angle $\theta$. An improved signal constellation with $\theta = (3\pi / 32)$ is shown in Fig. 13, wherein the empty bullets stand for the original places of the rotated points. This signal constellation achieves

$$D_a = \sqrt{\left(\left(1 + \sin\left(3\pi / 32\right)\right) / \left(1 - \cos\left(\pi / 4\right)\right)\right)} D_f^{8-PSK} = \sqrt{\left(1 + \sin\left(3\pi / 32\right)\right)} D_a^{8-PSK} \approx 1.135907 D_a^{8-PSK}$$

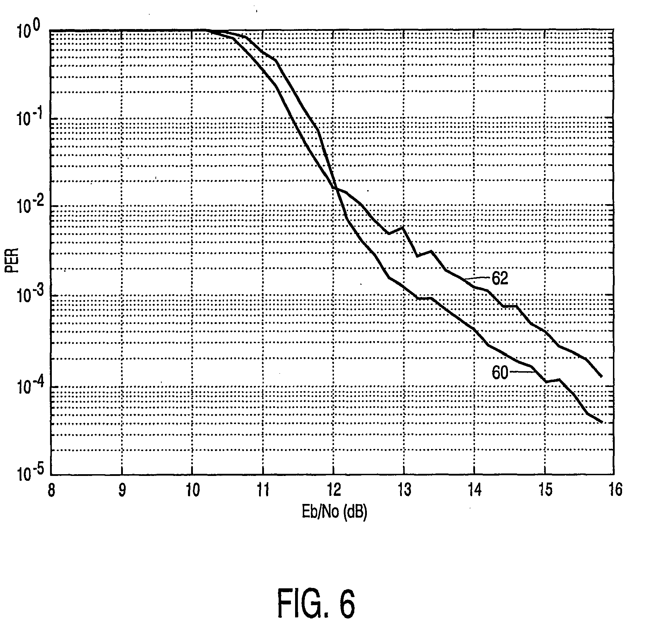

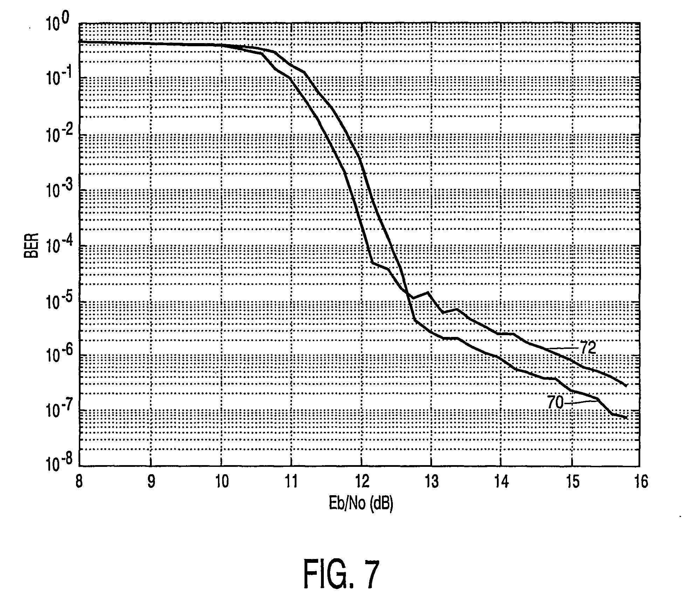

In Figs. 6 and 7 the performance of the modified 8-PSK signal constellation of Fig. 13 (see graphs 60 and 70) is compared with the standard 8-PSK signal constellation of Fig. 12C (see graphs 62 and 72). Note that the modified 8-PSK signal constellation leads to a slight degradation of at most 0.2dB at low SNR. This degradation is compensated by a gain of around 1dB at higher SNR. The modified 8-PSK signal constellation shows better performance at packet error rates below $10^{-2}$.

The scope of the invention is not limited to the embodiments explicitly disclosed. The invention is embodied in each new characteristic and each combination of characteristics. Any reference signs do not limit the scope of the claims. The word "comprising" does not exclude the presence of other elements or steps than those listed in a claim. Use of the word "a" or "an" preceding an element does not exclude the presence of a plurality of such elements.

**Claims**

1. A transmission system for transmitting a multilevel signal ($x_k$) from a transmitter (10) to a receiver (20), the transmitter (10) comprising a mapper (16) for mapping an input signal ($i_k$) according to a signal constellation onto the multilevel signal ($x_k$), the receiver (20) comprising a demapper (22) for demapping the received multilevel signal ($y_k$) according to said signal constellation,

**characterized in that** said signal constellation comprises a number of signal points with corresponding labels for which $D_a > D_f$, with $D_a$ being the minimum of the Euclidean distances between all pairs of signal points whose corresponding labels differ in a single position, and with $D_f$ being the minimum of the Euclidean distances between all pairs of signal points.

2. A transmitter (10) for transmitting a multilevel signal ($x_k$), the transmitter (10) comprising a mapper (16) for mapping an input signal ($i_k$) according to a signal constellation onto the multilevel signal ($x_k$),

**characterized in that** said signal constellation comprises a number of signal points with corresponding labels for which $D_a > D_f$, with $D_a$ being the minimum of the Euclidean distances between all pairs of signal points whose corresponding labels differ in a single position, and with $D_f$ being the minimum of the Euclidean distances between all pairs of signal points.

3. A receiver (20) for receiving a multilevel signal ($y_k$), the receiver (20) comprising a demapper (22) for demapping the multilevel signal ($y_k$) according to a signal constellation,

**characterized in that** said signal constellation comprises a number of signal points with corresponding labels for which $D_a > D_f$, with $D_a$ being the minimum of the Euclidean distances between all pairs of signal points whose corresponding labels differ in a single position, and with $D_f$ being the minimum of the Euclidean distances between all pairs of signal points.

4. A mapper (16) for mapping an input signal ($i_k$) according to a signal constellation onto a multilevel signal ($x_k$),

**characterized in that** said signal constellation comprises a number of signal points with corresponding labels for which $D_a > D_f$, with $D_a$ being the minimum of the Euclidean distances between all pairs of signal points whose corresponding labels differ in a single position, and with $D_f$ being the minimum of the Euclidean distances between all pairs of signal points.

5. A demapper (22) for demapping a multilevel signal ($y_k$) according to a signal constellation,

**characterized in that** said signal constellation comprises a number of signal points with corresponding labels for which $D_a > D_f$, with $D_a$ being the minimum of the Euclidean distances between all pairs of signal points whose corresponding labels differ in a single position, and with $D_f$ being the minimum of the Euclidean distances between all pairs of signal points.

6. A method of transmitting a multilevel signal ($x_k$) from a transmitter (10) to a receiver (20), the method comprising the steps of:

- mapping an input signal ($i_k$) according to a signal constellation onto the multilevel signal ($x_k$),
- transmitting the multilevel signal ($x_k$),
- receiving the multilevel signal ($y_k$) and
- demapping the multilevel signal ($y_k$) according to said signal constellation,

**characterized in that** said signal constellation comprises a number of signal points with corresponding labels for which $D_a > D_f$, with $D_a$ being the minimum of the Euclidean distances between all pairs of signal points whose corresponding labels differ in a single position, and with $D_f$ being the minimum of the Euclidean distances between all pairs of signal points.

7. The method according to claim 6, wherein $D_a$ has a substantially maximum value.

8. The method according to claim 6 or 7, wherein $\overline{H_1}$ has a substantially minimum value, with $\overline{H_1}$ being the average Hamming distance between all pairs of labels corresponding to neighboring signal points.

9. A signal constellation for mapping of an input signal ($i_k$) onto a multilevel signal ($x_k$) or for demapping a received multilevel signal ($y_k$),

**characterized in that** said signal constellation comprises a number of signal points with corresponding labels for which $D_a > D_f$, with $D_a$ being the minimum of the Euclidean distances between all pairs of signal points whose corresponding labels differ in a single position, and with $D_f$ being the minimum of the Euclidean distances between all pairs of signal points.

**10.** The signal constellation according to claim 9, wherein $D_a$ has a substantially maximum value.

**11.** The signal constellation according to claim 9 or 10, wherein $\overline{H_1}$ has a substantially minimum value, with $\overline{H_1}$ being the average Hamming distance between all pairs of labels corresponding to neighboring signal points.

**12.** The signal constellation according to claim 9 or 10, wherein the signal constellation is a 16-QAM signal constellation as depicted in any one of the Figs. 8A to 8G or an equivalent signal constellation that is obtained from a given one of said depicted signal constellations by means of an arbitrary combination of the following operations:

- choose an arbitrary binary 4-tuple and add it (modulo 2) to all labels of said given signal constellation;
- choose an arbitrary permutation of the positions of 4 bits and apply this permutation to all labels of said given signal combination;

- for said given signal constellation, rotate all signal points together with their labels by $l\dfrac{\pi}{2}$, $1 \leq l \leq 3$;

- for said given signal constellation, swap all signal points together with their labels upside down, or left to right, or around the diagonals.

**13.** The signal constellation according to claim 9 or 10, wherein the signal constellation is a 64-QAM signal constellation as depicted in any one of the Figs. 9A to 9C and 10 or an equivalent signal constellation that is obtained from a given one of said depicted signal constellations by means of an arbitrary combination of the following operations:

- choose an arbitrary binary 6-tuple and add it (modulo 2) to all labels of said given signal constellation;
- choose an arbitrary permutation of the positions of 6 bits and apply this permutation to all labels of said given signal combination;

- for said given signal constellation, rotate all signal points together with their labels by $l\dfrac{\pi}{2}$, $1 \leq l \leq 3$;

- for said given signal constellation, swap all signal points together with their labels upside down, or left to right, or around the diagonals.

**14.** The signal constellation according to claim 9 or 10, wherein the signal constellation is a 256-QAM signal constellation as depicted in any one of the Figs. 11A and 11B or an equivalent signal constellation that is obtained from a given one of said depicted signal constellations by means of an arbitrary combination of the following operations:

- choose an arbitrary binary 8-tuple and add it (modulo 2) to all labels of said given signal constellation;
- choose an arbitrary permutation of the positions of 8 bits and apply this permutation to all labels of said given signal combination;

- for said given signal constellation, rotate all signal points together with their labels by $l\dfrac{\pi}{2}$, $1 \leq l \leq 3$;

- for said given signal constellation, swap all signal points together with their labels upside down, or left to right, or around the diagonals.

**15.** The signal constellation according to claim 9 or 10, wherein the signal constellation is a 8-PSK signal constellation as depicted in any one of the Figs. 12A to 12C or an equivalent signal constellation that is obtained from a given one of said depicted signal constellations by means of an arbitrary combination of the following operations:

- choose an arbitrary binary 3-tuple and add it (modulo 2) to all labels of said given signal constellation;
- choose an arbitrary permutation of the positions of 3 bits and apply this permutation to all labels of said given signal combination;
- for said given signal constellation, rotate all signal points together with their labels by an arbitrary angle.

**16.** Signal constellation according to any one of the claims 9 to 15, to be used within the transmission system of claim 1, the transmitter of claim 2, the receiver of claim 3, the mapper of claim 4 or the demapper of claim 5.

**EP 1 356 652 B1**

**Patentansprüche**

1. Übertragungssystem zum Übertragen eines Mehrebenensignals ($x_k$) von einem Sender (10) zu einem Empfänger (20), wobei der Sender (10) einen Mapper (16) zum Abbilden eines Eingangssignals ($i_k$) gemäß einer Signalkonstellation auf dem Mehrebenensignal ($x_k$) umfasst und wobei der Empfänger (20) einen Demapper (22) zum Rückbilden des empfangenen Mehrebenensignals ($y_k$) gemäß der Signalkonstellation umfasst,
**dadurch gekennzeichnet, dass** die Signalkonstellation eine Anzahl Signalpunkte mit entsprechenden Markierungen umfasst, für welche $D_a > D_f$ ist, wobei $D_a$ das Minimum der euklidischen Abstände zwischen allen Signalpunktpaaren ist, deren entsprechende Markierungen sich in einer einzigen Position unterscheiden, und wobei $D_f$ das Minimum der euklidischen Abstände zwischen allen Signalpunktpaaren ist.

2. Sender (10) zum Übertragen eines Mehrebenensignals ($x_k$), wobei der Sender (10) einen Mapper (16) zum Abbilden eines Eingangssignal ($i_k$) gemäß einer Signalkonstellation auf dem Mehrebenensignal ($x_k$) umfasst,
**dadurch gekennzeichnet, dass** die Signalkonstellation eine Anzahl Signalpunkte mit entsprechenden Markierungen umfasst, für welche $D_a > D_f$ ist, wobei $D_a$ das Minimum der euklidischen Abstände zwischen allen Signalpunktpaaren ist, deren entsprechende Markierungen sich in einer einzigen Position unterscheiden, und wobei $D_f$ das Minimum der euklidischen Abstände zwischen allen Signalpunktpaaren ist.

3. Empfänger (20) zum Empfangen eines Mehrebenensignals ($y_k$), wobei der Empfänger (20) einen Demapper (22) zum Rückbilden des Mehrebenensignals ($y_k$) gemäß einer Signalkonstellation umfasst,
**dadurch gekennzeichnet, dass** die Signalkonstellation eine Anzahl Signalpunkte mit entsprechenden Markierungen umfasst, für welche $D_a > D_f$ ist, wobei $D_a$ das Minimum der euklidischen Abstände zwischen allen Signalpunktpaaren ist, deren entsprechende Markierungen sich in einer einzigen Position unterscheiden, und wobei $D_f$ das Minimum der euklidischen Abstände zwischen allen Signalpunktpaaren ist.

4. Mapper (16) zum Abbilden eines Eingangssignals ($i_k$) gemäß einer Signalkonstellation auf einem Mehrebenensignal ($x_k$),
**dadurch gekennzeichnet, dass** die Signalkonstellation eine Anzahl Signalpunkte mit entsprechenden Markierungen umfasst, für welche $D_a > D_f$ ist, wobei $D_a$ das Minimum der euklidischen Abstände zwischen allen Signalpunktpaaren ist, deren entsprechende Markierungen sich in einer einzigen Position unterscheiden, und wobei $D_f$ das Minimum der euklidischen Abstände zwischen allen Signalpunktpaaren ist.

5. Demapper (22) zum Rückbilden eines Mehrebenensignals ($y_k$) gemäß einer Signalkonstellation,
**dadurch gekennzeichnet, dass** die Signalkonstellation eine Anzahl Signalpunkte mit entsprechenden Markierungen umfasst, für welche $D_a > D_f$ ist, wobei $D_a$ das Minimum der euklidischen Abstände zwischen allen Signalpunktpaaren ist, deren entsprechende Markierungen sich in einer einzigen Position unterscheiden, und wobei $D_f$ das Minimum der euklidischen Abstände zwischen allen Signalpunktpaaren ist.

6. Verfahren zum Übertragen eines Mehrebenensignals ($x_k$) von einem Sender (10) zu einem Empfänger (20), das Verfahren die folgenden Schritte umfassend:

   - Abbilden eines Eingangssignals ($i_k$) gemäß einer Signalkonstellation auf dem Mehrebenensignal ($x_k$),
   - Übertragen des Mehrebenensignals ($x_k$),
   - Empfangen des Mehrebenensignals ($y_k$) und
   - Rückbilden des Mehrebenensignals ($y_k$) gemäß der Signalkonstellation,

   **dadurch gekennzeichnet, dass** die Signalkonstellation eine Anzahl Signalpunkte mit entsprechenden Markierungen umfasst, für welche $D_a > D_f$ ist, wobei $D_a$ das Minimum der euklidischen Abstände zwischen allen Signalpunktpaaren ist, deren entsprechende Markierungen sich in einer einzigen Position unterscheiden, und wobei Df das Minimum der euklidischen Abstände zwischen allen Signalpunktpaaren ist.

7. Verfahren nach Anspruch 6, wobei $D_a$ einen im Wesentlichen maximalen Wert aufweist.

8. Verfahren nach Anspruch 6 oder 7, wobei $\overline{H_1}$ einen im Wesentlichen minimalen Wert aufweist, wobei $\overline{H_1}$ der durchschnittliche Hamming-Abstand zwischen allen Markierungspaaren ist, welche benachbarten Signalpunkten entsprechen.

**12**

**9.** Signalkonstellation zum Abbilden eines Eingangssignals ($i_k$) auf einem Mehrebenensignal ($x_k$) oder zum Rückbilden eines empfangenen Mehrebenensignals ($y_k$),
**dadurch gekennzeichnet, dass** die Signalkonstellation eine Anzahl Signalpunkte mit entsprechenden Markierungen umfasst, für welche $D_a > D_f$ ist, wobei $D_a$ das Minimum der euklidischen Abstände zwischen allen Signalpunktpaaren ist, deren entsprechende Markierungen sich in einer einzigen Position unterscheiden, und wobei Df das Minimum der euklidischen Abstände zwischen allen Signalpunktpaaren ist.

**10.** Signalkonstellation nach Anspruch 9, wobei $D_a$ einen im Wesentlichen maximalen Wert aufweist.

**11.** Signalkonstellation nach Anspruch 9 oder 10, wobei $\overline{H_1}$ einen im Wesentlichen minimalen Wert aufweist, wobei $\overline{H_1}$ der durchschnittliche Hamming-Abstand zwischen allen Markierungspaaren ist, welche benachbarten Signalpunkten entsprechen.

**12.** Signalkonstellation nach Anspruch 9 oder 10, wobei die Signalkonstellation eine 16-QAM-Signalkonstellation ist, wie in allen der Fig. 8A bis 8G dargestellt, oder eine äquivalente Signalkonstellation ist, welche aus einer gegebenen der dargestellten Signalkonstellationen mittels einer willkürlichen Kombination der folgenden Operationen erhalten wird:

    - Wählen eines willkürlichen binären 4-Tupels und sein Addieren (modulo 2) zu allen Markierungen der gegebenen Signalkonstellation;
    - Wählen einer willkürlichen Permutation der Positionen von 4 Bits und Anwenden dieser Permutation auf alle Markierungen der gegebenen Signalkombination;

    - für die gegebene Signalkonstellation Rotieren aller Signalpunkte zusammen mit ihren Markierungen um $l\dfrac{\pi}{2}$, $1 \le l \le 3$ ;

    - für die gegebene Signalkonstellation Vertauschen aller Signalpunkte zusammen mit ihren Markierungen von oben nach unten oder von links nach rechts oder um die Diagonalen.

**13.** Signalkonstellation nach Anspruch 9 oder 10, wobei die Signalkonstellation eine 64-QAM-Signalkonstellation ist, wie in allen der Fig. 9A bis 9C und 10 dargestellt, oder eine äquivalente Signalkonstellation ist, welche aus einer gegebenen der dargestellten Signalkonstellationen mittels einer willkürlichen Kombination der folgenden Operationen erhalten wird:

    - Wählen eines willkürlichen binären 6-Tupels und sein Addieren (modulo 2) zu allen Markierungen der gegebenen Signalkonstellation;
    - Wählen einer willkürlichen Permutation der Positionen von 6 Bits und Anwenden dieser Permutation auf alle Markierungen der gegebenen Signalkombination;

    - für die gegebene Signalkonstellation Rotieren aller Signalpunkte zusammen mit ihren Markierungen um $l\dfrac{\pi}{2}$, $1 \le l \le 3$;

    - für die gegebene Signalkonstellation Vertauschen aller Signalpunkte zusammen mit ihren Markierungen von oben nach unten oder von links nach rechts oder um die Diagonalen.

**14.** Signalkonstellation nach Anspruch 9 oder 10, wobei die Signalkonstellation eine 256-QAM-Signalkonstellation ist, wie in allen der Fig. 11A und 11B dargestellt, oder eine äquivalente Signalkonstellation ist, welche aus einer gegebenen der dargestellten Signalkonstellationen mittels einer willkürlichen Kombination der folgenden Operationen erhalten wird:

    - Wählen eines willkürlichen binären 8-Tupels und sein Addieren (modulo 2) zu allen Markierungen der gegebenen Signalkonstellation;
    - Wählen einer willkürlichen Permutation der Positionen von 8 Bits und Anwenden dieser Permutation auf alle Markierungen der gegebenen Signalkombination;

- für die gegebene Signalkonstellation Rotieren aller Signalpunkte zusammen mit ihren Markierungen um

$$l\frac{\pi}{2}, \quad 1 \leq l \leq 3;$$

- für die gegebene Signalkonstellation Vertauschen aller Signalpunkte zusammen mit ihren Markierungen von oben nach unten oder von links nach rechts oder um die Diagonalen.

**15.** Signalkonstellation nach Anspruch 9 oder 10, wobei die Signalkonstellation eine 8-PSK-Signalkonstellation ist, wie in allen der Fig. 12A bis 12C dargestellt, oder eine äquivalente Signalkonstellation ist, welche aus einer gegebenen der dargestellten Signalkonstellationen mittels einer willkürlichen Kombination der folgenden Operationen erhalten wird:

- Wählen eines willkürlichen binären 3-Tupels und sein Addieren (modulo 2) zu allen Markierungen der gegebenen Signalkonstellation;
- Wählen einer willkürlichen Permutation der Positionen von 3 Bits und Anwenden dieser Permutation auf alle Markierungen der gegebenen Signalkombination;
- für die gegebene Signalkonstellation Rotieren aller Signalpunkte zusammen mit ihren Markierungen um einen willkürlichen Winkel;

**16.** Signalkonstellation gemäß einem der Ansprüche 9 bis 15 zum Verwenden innerhalb des Übertragungssystems nach Anspruch 1, des Senders nach Anspruch 2, des Empfängers nach Anspruch 3, des Mappers nach Anspruch 4 oder des Demappers nach Anspruch 5.

## Revendications

**1.** Système de transmission destiné à transmettre un signal multi-niveaux ($x_k$) d'un émetteur (10) à un récepteur (20), l'émetteur (10) comprenant un mappeur (16) destiné à mapper un signal d'entrée ($i_k$) en fonction d'une constellation de signal sur le signal multi-niveaux ($x_k$), le récepteur (20) comprenant un démappeur (22) destiné à démapper le signal multi-niveaux reçu ($y_k$) en fonction de ladite constellation de signal,
**caractérisé en ce que** ladite constellation de signal comprend un certain nombre de points de signal présentant des étiquettes correspondantes pour lesquelles $D_a > D_f$, $D_a$ étant le minimum des distances euclidiennes entre toutes les paires de points de signal dont les étiquettes correspondantes sont différentes pour une position unique, et $D_f$ étant le minimum des distances euclidiennes entre toutes les paires de points de signal.

**2.** Emetteur (10) destiné à transmettre un signal multi-niveaux ($x_k$), l'émetteur (10) comprenant un mappeur (16) destiné à mapper un signal d'entrée ($i_k$) en fonction d'une constellation de signal sur le signal multi-niveaux ($x_k$),
**caractérisé en ce que** ladite constellation de signal comprend un certain nombre de points de signal présentant des étiquettes correspondantes pour lesquelles $D_a > D_f$, $D_a$ étant le minimum des distances euclidiennes entre toutes les paires de points de signal dont les étiquettes correspondantes sont différentes pour une position unique, et $D_f$ étant le minimum des distances euclidiennes entre toutes les paires de points de signal.

**3.** Récepteur (20) destiné à recevoir un signal multi-niveaux ($y_k$), le récepteur (20) comprenant un démappeur (22) destiné à démapper le signal multi-niveaux reçu ($Y_k$) en fonction d'une constellation de signal,
**caractérisé en ce que** ladite constellation de signal comprend un certain nombre de points de signal présentant des étiquettes correspondantes pour lesquelles $D_a > D_f$, $D_a$ étant le minimum des distances euclidiennes entre toutes les paires de points de signal dont les étiquettes correspondantes sont différentes pour une position unique, et $D_f$ étant le minimum des distances euclidiennes entre toutes les paires de points de signal.

**4.** Mappeur (16) destiné à mapper un signal d'entrée ($i_k$) en fonction d'une certaine constellation de signal sur un signal multi-niveaux ($x_k$),
**caractérisé en ce que** ladite constellation de signal comprend un certain nombre de points de signal présentant des étiquettes correspondantes pour lesquelles $D_a > D_f$, $D_a$ étant le minimum des distances euclidiennes entre toutes les paires de points de signal dont les étiquettes correspondantes sont différentes pour une position unique, et $D_f$ étant le minimum des distances euclidiennes entre toutes les paires de points de signal.

**5.** Démappeur (22) destiné à démapper un signal multi-niveaux ($y_k$) en fonction d'une constellation de signal,

**caractérisé en ce que** ladite constellation de signal comprend un certain nombre de points de signal présentant des étiquettes correspondantes pour lesquelles $D_a > D_f$, $D_a$ étant le minimum des distances euclidiennes entre toutes les paires de points de signal dont les étiquettes correspondantes sont différentes pour une position unique, et $D_f$ étant le minimum des distances euclidiennes entre toutes les paires de points de signal.

6. Procédé destiné à transmettre un signal multi-niveaux *(x_k)* d'un émetteur (10) à un récepteur (20), le procédé comprenant les étapes suivantes :

- mappage d'un signal d'entrée *(i_k)* en fonction d'une constellation de signal sur le signal multi-niveaux *(x_k)*;
- transmission du signal multi-niveaux *(x_k)*;
- réception du signal multi-niveaux *(y_k)* et
- démappage du signal multi-niveaux *(y_k)* en fonction de la constellation de signal,

**caractérisé en ce que** ladite constellation de signal comprend un certain nombre de points de signal présentant des étiquettes correspondantes pour lesquelles $D_a > D_f$, $D_a$ étant le minimum des distances euclidiennes entre toutes les paires de points de signal dont les étiquettes correspondantes sont différentes pour une position unique, et $D_f$ étant le minimum des distances euclidiennes entre toutes les paires de points de signal.

7. Procédé suivant la revendication 6, dans lequel $D_a$ présente une valeur sensiblement maximale.

8. Procédé selon la revendication 6 ou 7, dans lequel $\overline{H_1}$ présente une valeur sensiblement minimale, $\overline{H_1}$ étant la distance de Hamming moyenne entre toutes les paires d'étiquettes correspondant à des points de signal voisins.

9. Constellation de signal destinée au mappage d'un signal d'entrée ($i_k$) sur un signal multi-niveaux ($x_k$) ou au démappage d'un signal multi-niveaux reçu ($y_k$),
**caractérisée en ce que** ladite constellation de signal comprend un certain nombre de points de signal présentant des étiquettes correspondantes pour lesquelles $D_a > D_f$, $D_a$ étant le minimum des distances euclidiennes entre toutes les paires de points de signal dont les étiquettes correspondantes sont différentes pour une position unique, et $D_f$ étant le minimum des distances euclidiennes entre toutes les paires de points de signal.

10. Constellation de signal suivant la revendication 9, dans laquelle $D_a$ présente une valeur sensiblement maximale.

11. Constellation de signal suivant la revendication 9 ou 10, dans laquelle $\overline{H_1}$ présente une valeur sensiblement minimale, $\overline{H_1}$ étant la distance de Hamming moyenne entre toutes les paires d'étiquettes correspondant à des points de signal voisins.

12. Constellation de signal selon la revendication 9 ou 10, dans laquelle la constellation de signal est une constellation de signal QAM-16 comme décrit sur l'une quelconque des Fig. 8A à 8G, ou une constellation de signal équivalente obtenue à partir d'une desdites constellations donnée de signal décrites au moyen d'une combinaison arbitraire des opérations suivantes :

- choisir un quadruple arbitraire binaire et l'additionner (modulo 2) à toutes les étiquettes de ladite constellation de signal donnée;
- choisir une permutation arbitraire des positions de 4 bits et appliquer cette permutation à toutes les étiquettes de ladite combinaison de signal donnée;
- pour ladite constellation de signal donnée, faire subir une rotation à tous les points de signal conjointement avec leurs étiquettes à raison de $l\dfrac{\pi}{2}$, $1 \leq l \leq 3$, et

- pour ladite constellation donnée, permuter tous les points de signal conjointement avec leurs étiquettes, sens dessus-dessous, ou de la gauche vers la droite, ou autour des diagonales.

13. Constellation de signal selon la revendication 9 ou 10, dans laquelle la constellation de signal est une constellation de signal QAM-64 comme décrit sur l'une quelconque des Fig. 9A à 9C et 10, ou une constellation de signal équivalente obtenue à partir d'une desdites constellations de signal donnée, décrites au moyen d'une combinaison arbitraire des opérations suivantes :

- choisir un sextuple arbitraire binaire et l'additionner (modulo 2) à toutes les étiquettes de ladite constellation de signal donnée;
- choisir une permutation arbitraire des positions de 6 bits et appliquer cette permutation à toutes les étiquettes de ladite combinaison de signal donnée;
- pour ladite constellation de signal donnée, faire subir une rotation à tous les points de signal conjointement avec leurs étiquettes à raison de $l\dfrac{\pi}{2}$, $1 \le l \le 3$, et
- pour ladite constellation donnée, permuter tous les points de signal conjointement avec leurs étiquettes, sens dessus-dessous, ou de la gauche vers la droite, ou autour des diagonales.

14. Constellation de signal selon la revendication 9 ou 10, dans laquelle la constellation de signal est une constellation de signal QAM-256 comme décrit sur l'une quelconque des Fig. 11A à 11B, ou une constellation de signal équivalente obtenue à partir d'une desdites constellations de signal donnée, décrites au moyen d'une combinaison arbitraire des opérations suivantes :

- choisir un octuple arbitraire binaire et l'additionner (modulo 2) à toutes les étiquettes de ladite constellation de signal donnée;
- choisir une permutation arbitraire des positions de 8 bits et appliquer cette permutation à toutes les étiquettes de ladite combinaison de signal donnée;
- pour ladite constellation de signal donnée, faire subir une rotation à tous les points de signal conjointement avec leurs étiquettes à raison de $l\dfrac{\pi}{2}$, $1 \le l \le 3$, et
- pour ladite constellation donnée, permuter tous les points de signal conjointement avec leurs étiquettes, sens dessus-dessous, ou de la gauche vers la droite, ou autour des diagonales.

15. Constellation de signal selon la revendication 9 ou 10, dans laquelle la constellation de signal est une constellation de signal PSK-8 comme décrit sur l'une quelconque des Fig. 12A à 12C, ou une constellation de signal équivalente obtenue à partir d'une desdites constellations de signal donnée, décrites au moyen d'une combinaison arbitraire des opérations suivantes :

- choisir un triplet arbitraire binaire et l'additionner (modulo 2) à toutes les étiquettes de ladite constellation de signal donnée;
- choisir une permutation arbitraire des positions de 3 bits et appliquer cette permutation à toutes les étiquettes de ladite combinaison de signal donnée, et
- pour ladite constellation de signal donnée, faire subir une rotation à tous les points de signal conjointement avec leurs étiquettes suivant un angle arbitraire.

16. Constellation de signal suivant l'une quelconque des revendication 9 à 15, à utiliser à l'intérieur du système de transmission suivant la revendication 1, l'émetteur suivant la revendication 2, le récepteur suivant la revendication 3, le mappeur suivant la revendication 4, ou le démappeur suivant la revendication 5.

FIG. 1

FIG. 2

FIG. 3A

FIG. 3B

FIG. 3C

FIG. 3D

FIG. 4

EP 1 356 652 B1

FIG. 5

19

FIG. 6

FIG. 7

FIG. 8A

FIG. 8B

FIG. 8C

FIG. 8D

FIG. 8E

| | | | |
|---|---|---|---|
| 0000 • | 1010 • | 0011 • | 1001 • |
| 1100 • | 0110 • | 1111 • | 0101 • |
| 1011 • | 0001 • | 1000 • | 0010 • |
| 0111 • | 1101 • | 0100 • | 1110 • |

FIG. 8F

| | | | |
|---|---|---|---|
| 0000 • | 1101 • | 0110 • | 1011 • |
| 1110 • | 0011 • | 1000 • | 0101 • |
| 1001 • | 0100 • | 1111 • | 0010 • |
| 0111 • | 1010 • | 0001 • | 1100 • |

FIG. 8G

| | | | |
|---|---|---|---|
| 0000 • | 1001 • | 1100 • | 0101 • |
| 1110 • | 0111 • | 0010 • | 1011 • |
| 1101 • | 0100 • | 0001 • | 1000 • |
| 0011 • | 1010 • | 1111 • | 0110 • |

000000 011000 010100 001100 100100 111100 110000 101000
• • • • • • • •

010010 001010 000110 011110 110110 101110 100010 111010
• • • • • • • •

010001 001001 000101 011101 110101 101101 100001 111001
• • • • • • • •

000011 011011 010111 001111 100111 111111 110011 101011
• • • • • • • •

110100 101100 100000 111000 010000 001000 000100 011100
• • • • • • • •

100110 111110 110010 101010 000010 011010 010110 001110
• • • • • • • •

100101 111101 110001 101001 000001 011001 010101 001101
• • • • • • • •

110111 101111 100011 111011 010011 001011 000111 011111
• • • • • • • •

# FIG. 9A

| 000000 | 011000 | 010100 | 001100 | 110001 | 101001 | 100101 | 111101 |
|---|---|---|---|---|---|---|---|
| • | • | • | • | • | • | • | • |

| 010010 | 001010 | 000110 | 011110 | 100011 | 111011 | 110111 | 101111 |
|---|---|---|---|---|---|---|---|
| • | • | • | • | • | • | • | • |

| 010001 | 001001 | 000101 | 011101 | 100000 | 111000 | 110100 | 101100 |
|---|---|---|---|---|---|---|---|
| • | • | • | • | • | • | • | • |

| 000011 | 011011 | 010111 | 001111 | 110010 | 101010 | 100110 | 111110 |
|---|---|---|---|---|---|---|---|
| • | • | • | • | • | • | • | • |

| 100001 | 111001 | 110101 | 101101 | 010000 | 001000 | 000100 | 011100 |
|---|---|---|---|---|---|---|---|
| • | • | • | • | • | • | • | • |

| 110011 | 101011 | 100111 | 111111 | 000010 | 011010 | 010110 | 001110 |
|---|---|---|---|---|---|---|---|
| • | • | • | • | • | • | • | • |

| 110000 | 101000 | 100100 | 111100 | 000001 | 011001 | 010101 | 001101 |
|---|---|---|---|---|---|---|---|
| • | • | • | • | • | • | • | • |

| 100010 | 111010 | 110110 | 101110 | 010011 | 001011 | 000111 | 011111 |
|---|---|---|---|---|---|---|---|
| • | • | • | • | • | • | • | • |

# FIG. 9B

| 000000 | 011000 | 010100 | 001100 | 110010 | 101010 | 100110 | 111110 |
| • | • | • | • | • | • | • | • |

| 000011 | 011011 | 010111 | 001111 | 110001 | 101001 | 100101 | 111101 |
| • | • | • | • | • | • | • | • |

| 010010 | 001010 | 000110 | 011110 | 100000 | 111000 | 110100 | 101100 |
| • | • | • | • | • | • | • | • |

| 110011 | 101011 | 100111 | 111111 | 000001 | 011001 | 010101 | 001101 |
| • | • | • | • | • | • | • | • |

| 100010 | 111010 | 110110 | 101110 | 010000 | 001000 | 000100 | 011100 |
| • | • | • | • | • | • | • | • |

| 100001 | 111001 | 110101 | 101101 | 010011 | 001011 | 000111 | 011111 |
| • | • | • | • | • | • | • | • |

| 110000 | 101000 | 100100 | 111100 | 000010 | 011010 | 010110 | 001110 |
| • | • | • | • | • | • | • | • |

| 010001 | 001001 | 000101 | 011101 | 100011 | 111011 | 110111 | 101111 |
| • | • | • | • | • | • | • | • |

# FIG. 9C

26

| 000000 | 011000 | 001100 | 010100 | 110010 | 101010 | 111110 | 100110 |
| 010010 | 001010 | 011110 | 000110 | 100000 | 111000 | 101100 | 110100 |
| 000011 | 011011 | 001111 | 010111 | 110001 | 101001 | 111101 | 100101 |
| 110011 | 101011 | 111111 | 100111 | 000001 | 011001 | 001101 | 010101 |
| 100010 | 111010 | 101110 | 110110 | 010000 | 001000 | 011100 | 000100 |
| 110000 | 101000 | 111100 | 100100 | 000010 | 011010 | 001110 | 010110 |
| 100001 | 111001 | 101101 | 110101 | 010011 | 001011 | 011111 | 000111 |
| 010001 | 001001 | 011101 | 000101 | 100011 | 111011 | 101111 | 110111 |

## FIG. 10

FIG. 11A

EP 1 356 652 B1

**FIG. 11B**

```
00000000  01100000  00110000  01010000  01001000  00101000  01111000  00011000  10001000  11101000  10111000  11011000  11000000  10100000  11110000  10010000
   •         •         •         •         •         •         •         •         •         •         •         •         •         •         •         •

01000100  00100100  01110100  00010100  00001100  01101100  00111100  01011100  11001100  10101100  11111100  10011100  10000100  11100100  10110100  11010100
   •         •         •         •         •         •         •         •         •         •         •         •         •         •         •         •

00000110  01100110  00110110  01010110  01001110  00101110  01111110  00011110  10001110  11101110  10111110  11011110  11000110  10100110  11110110  10010110
   •         •         •         •         •         •         •         •         •         •         •         •         •         •         •         •

01000010  00100010  01110010  00010010  00001010  01101010  00111010  01011010  11001010  10101010  11111010  10011010  10000010  11100010  10110010  11010010
   •         •         •         •         •         •         •         •         •         •         •         •         •         •         •         •

01000001  00100001  01110001  00010001  00001001  01101001  00111001  01011001  11001001  10101001  11111001  10011001  10000001  11100001  10110001  11010001
   •         •         •         •         •         •         •         •         •         •         •         •         •         •         •         •

00000101  01100101  00110101  01010101  01001101  00101101  01111101  00011101  10001101  11101101  10111101  11011101  11000101  10100101  11110101  10010101
   •         •         •         •         •         •         •         •         •         •         •         •         •         •         •         •

01000111  00100111  01110111  00010111  00001111  01101111  00111111  01011111  11001111  10101111  11111111  10011111  10000111  11100111  10110111  11010111
   •         •         •         •         •         •         •         •         •         •         •         •         •         •         •         •

00000011  01100011  00110011  01010011  01001011  00101011  01111011  00011011  10001011  11101011  10111011  11011011  11000011  10100011  11110011  10010011
   •         •         •         •         •         •         •         •         •         •         •         •         •         •         •         •

11001000  10101000  11111000  10011000  10000000  11100000  10110000  11010000  01000000  00100000  01110000  00010000  00001000  01101000  00111000  01011000
   •         •         •         •         •         •         •         •         •         •         •         •         •         •         •         •

10001100  11101100  10111100  11011100  11000100  10100100  11110100  10010100  00000100  01100100  00110100  01010100  01001100  00101100  01111100  00011100
   •         •         •         •         •         •         •         •         •         •         •         •         •         •         •         •

11001110  10101110  11111110  10011110  10000110  11100110  10110110  11010110  01000110  00100110  01110110  00010110  00001110  01101110  00111110  01011110
   •         •         •         •         •         •         •         •         •         •         •         •         •         •         •         •

10001010  11101010  10111010  11011010  11000010  10100010  11110010  10010010  00000010  01100010  00110010  01010010  01001010  00101010  01111010  00011010
   •         •         •         •         •         •         •         •         •         •         •         •         •         •         •         •

10001001  11101001  10111001  11011001  11000001  10100001  11110001  10010001  00000001  01100001  00110001  01010001  01001001  00101001  01111001  00011001
   •         •         •         •         •         •         •         •         •         •         •         •         •         •         •         •

11001101  10101101  11111101  10011101  10000101  11100101  10110101  11010101  01000101  00100101  01110101  00010101  00001101  01101101  00111101  01011101
   •         •         •         •         •         •         •         •         •         •         •         •         •         •         •         •

10001111  11101111  10111111  11011111  11000111  10100111  11110111  10010111  00000111  01100111  00110111  01010111  01001111  00101111  01111111  00011111
   •         •         •         •         •         •         •         o         •         •         •         •         •         •         •         •

11001011  10101011  11111011  10011011  10000011  11100011  10110011  11010011  01000011  00100011  01110011  00010011  00001011  01101011  00111011  01011011
   •         •         •         •         •         •         •         •         •         •         •         •         •         •         •         •
```

FIG. 12A

FIG. 12B

FIG. 12C

FIG. 13